Europäisches Patentamt

European Patent Office

Office européen des brevets

(19)

(11) Publication number : **0 548 865 B1**

## EUROPEAN PATENT SPECIFICATION

(12)

(45) Date of publication of patent specification :
**18.10.95 Bulletin 95/42**

(51) Int. Cl.⁶ : **H01C 17/06,** H01B 1/08,
H01B 1/14

(21) Application number : **92121673.5**

(22) Date of filing : **19.12.92**

(54) **Thick film resistor composition.**

(30) Priority : **25.12.91 JP 343610/91**

(43) Date of publication of application :
**30.06.93 Bulletin 93/26**

(45) Publication of the grant of the patent :
**18.10.95 Bulletin 95/42**

(84) Designated Contracting States :
**DE FR GB**

(56) References cited :
**EP-A- 0 115 798**
**EP-A- 0 146 119**
**EP-A- 0 327 828**
**EP-A- 0 416 525**

(73) Proprietor : **E.I. DU PONT DE NEMOURS AND COMPANY**
**1007 Market Street**
**Wilmington Delaware 19898 (US)**

(72) Inventor : **Borland, William**
**Sunny-Bell A Wada,**
**Honmoku Naka-ku**
**Yokohama-shi, Kanagawa-ken 231 (JP)**
Inventor : **Hayakawa, Keiichiro**
**3-17-12-602 Take**
**Yokosuka-shi, Kanagawa-ken 238-03 (JP)**
Inventor : **Matsuno, Hisashi**
**4-6-13-302 Ogawa**
**Machida-shi, Tokyo-to 194 (JP)**
Inventor : **Sato, Takeshi**
**3-73-1-103 Chofugaoka**
**Chofu-shi, Tokyo-to 182 (JP)**
Inventor : **Smith, Jerome David**
**72-2A San'nomiya,**
**Honmoku Naka-ku**
**Yokohama-shi, Kanagawa-ken 231 (JP)**

(74) Representative : **von Kreisler, Alek,**
**Dipl.-Chem. et al**
**Patentanwälte**
**von Kreisler-Selting-Werner**
**Postfach 10 22 41**
**D-50462 Köln (DE)**

## Description

### FIELD OF INVENTION:

The invention is directed to thick film resistor compositions containing ruthenium-based oxides as the conductive component.

### BACKGROUND OF THE INVENTION:

The present invention relates to a composition useful for manufacturing a thick film resistor, in particular a composition using as a glass binder at least a mixture of two glasses with different lead oxide contents or softening temperatures.

When using a thick film resistor composition in a hybrid micro-electronic circuit or as a chip resistor and the like, it is important for it to exhibit high electrical stability, particularly with small variations in changes in the pad length (width) of the various resistors, in the resistance values (R) and the temperature coefficient of resistance (TCR). The sizes of resistors in recent years encompass a broad range from extremely small (0.3 x 0.3 mm) to several mm$^2$ in dimensions, depending upon the design of the given device. However, when used in combination with Pd/Ag electrodes or Ag electrodes or the like, the resistor, as its shape becomes smaller, will end up changing its printed shape or film thickness or else exhibit variations in the resistance values and the TCR of the thick film resistor as diffusion of Ag or the like takes place from the electrode. The resistor value, even after having varied somewhat, can be adjusted to reach the designated resistor value by laser trimming part of the thick resistor film, i.e., trimming by a laser. However, the TCR, once varied, cannot be actively adjusted. Therefore, it is desired for the dependency of the TCR, rather than the resistor value, upon the pad length above the resistor to be small, i.e., for the length effect to be small.

In addition, a glass layer called an overcoat glass is provided on the thick film resistor generated on a base material. That is to say, a thick film resistor is printed with an overcoat glass to improve its laser trimming capability, followed by laser trimming and firing. In the case of electronic parts, such as a chip resistor and resistor network and the like, additionally a one layer overcoat glass is printed and refired. However, during the firing of an overcoat glass, glass components tend to mutually diffuse between the thick film resistor and the overcoat glass which comes in contact with the resistor. This will vary the resistance value and TCR of the thick film resistor. In particular, it is not desirable for the resistance value to vary after laser trimming.

It is the electrically conducting components and the properties of the glass binder in a thick film resistor composition that affect the resistor value and the TCR of the thick film resistor.

A thick film resistor composition uses as an electrically conducting component an oxide of metals selected from the group consisting of, for example, rhodium, iridium, ruthenium and copper, a lead ruthenium pyrochlore oxide or a mixture thereof. The glass binder uses a borosilicate lead glass, a PbO-Al$_2$O$_3$-SiO$_2$ type glass and the like. The composition of the glass binder is limited in the contents of components, so as to match the coefficient of thermal expansion of the base material and to have a suitable aging or bonding temperature range. For example, use is made of a borosilicate lead glass containing not more than 35% by weight of silica and at least 51% by weight of lead oxide. These electrically conducting components and glass binders are useful for their low temperature firing capability (for example, 580C) and adjustments of the resistance values and the TCR but they are not satisfactory in terms of the length effect of the TCR and their stability when in contact with the overcoat glass.

An example of a thick film resistor composition consisting of a ruthenium-based oxide and a glass mixture is given in document EP-A-0 416 525.

### SUMMARY OF THE INVENTION:

The present invention is directed to a thick film resistor composition with a small length effect on the TCR and little variation in the resistance value and the TCR on firing with an overcoat glass.

In particular, the invention is directed to a thick film resistor composition comprising a ruthenium oxide and/or a ruthenium pyrochlore oxide as an electrically conducting component and a glass binder comprising a mixture of a first glass comprising 30-60% by weight of SiO$_2$, 5-30% by weight of CaO, 1-40% by weight of B$_2$O$_3$, 0-50% by weight of PbO and 0-20% by weight of Al$_2$O$_3$ in which the total of SiO$_2$, CaO, B$_2$O$_3$, PbO and Al$_2$O$_3$ amounts to at least 95% by weight thereof and a second glass comprising a lead silicate-type glass with the PbO amounting to at least 50% by weight thereof, wherein the ratio of said electrically conducting component of said thick film resistor composition is 10-50% by weight, that of the first glass is 5-35% by weight and that of the second glass is 5-40% by weight.

DETAILED DESCRIPTION OF THE INVENTION:

The thick film resistor composition of this invention contains as an electrically conducting component a ruthenium oxide or a ruthenium pyrochlore oxide. The ruthenium pyrochlore oxides are the type of pyrochlore oxides which are multicomponent compounds of $Ru^{+4}$, $Ir^{+4}$ or a mixture thereof (M″) represented by the following general formula:

$$(M_xBi_{2-x})(M'_yM''_{2-y})O_{7-z}$$

In the formula, M is selected from the group selected from iridium, thallium, indium, cadmium, lead, copper and rare earth metals; M′ is selected from the group consisting of platinum, titanium, chromium, rhodium and antimony; M″ is ruthenium, iridium or a mixture thereof; and X is 0-2 except for univalent copper when $x \leqq 1$, y is 0-0.5 but y = 0-1 if M′ is rhodium or more than one out of platinum, titanium, chromium, rhodium and antimony; and z is 0-1 but is at least the same as about x/2 if M is divalent lead or cadmium. These ruthenium pyrochlore oxides are described in detail in U.S. Patent 3,583,931.

The preferred ruthenium pyrochlore oxides are bismuth ruthenate, $Bi_2Ru_2O_7$ and lead ruthenate, $Pb_2Ru_2O_6$. This is because they can be easily obtained in a pure form, they are not adversely affected by glass binders, they exhibit a relatively small TCR, they are stable even when heated to about 1000C in air, and they are relatively stable even in a reducing atmosphere. Particularly preferred is lead ruthenate, $Pb_2Ru_2O_6$. In addition, it is possible to use pyrochlores such as $Pb_{1.5}Bi_{0.5}Ru_2O_{6.20}$ and $CdBiRu_2O_{6.5}$. In all of these cases, y = 0.

The electrically conducting component is used in an amount of 10-50% by weight, preferably 12-40% by weight based on the entire weight of the composition containing an organic medium. The amount will be 14-75% by weight, preferably 17-57% by weight on the basis of the total inorganic solids. The term total inorganic solids means the total of conducting components and glass binders. If a composition of this invention contains an inorganic additive, in addition to the electrically conducting components and glass binders, the word total inorganic solids means the total including said inorganic additive.

The thick film resistor composition of this invention uses, as a glass binder a mixture of the first glass and the second glass having the compositions as previously defined. The first glass containing at the most 50% by weight of lead oxide, is, in general, a high softening temperature glass, the second glass, which contains a minimum of 50% by weight of lead oxide, is, in general, a low softening point glass. The glass binder of this invention is characterized by using two such glasses which differ in the lead oxide content or the softening temperature.

The first glass and second glass cannot be used individually as glass binders for the thick film resistor composition. The former will not fire and the latter glass is too soft to prevent the shape of the resistor from collapsing. It was unexpected that the use of a mixture of glasses which were considered not possible to be used individually gives a thick film resistor with a small length effect on TCR as well as small variations in the resistance value and the TCR upon firing the overcoat glass.

The first glass is a glass in which the total of $SiO_2$, CaO, $B_2O_3$, PbO and $Al_2O_3$ amounts to at least 95% by weight thereof. At least 30% by weight of $SiO_2$ is needed. This is because a level below this range makes it difficult to provide a sufficiently high softening temperature. However, the amount is not more than 60% by weight. This is because a level greater than this range presents the possibility that $SiO_2$ may crystallize. At least 5% by weight of CaO is needed. However, it should not exceed more than 30% by weight. A level exceeding 30% by weight presents the possibility of the Ca undergoing crystallization with other elements. At least 1% by weight of $B_2O_3$ is needed. However, it should not exceed 40% by weight. A level exceeding 40% by weight presents the possibility that glass formation may not occur. PbO must be no more than 50% by weight. This is because a level exceeding 50% by weight will make it difficult to reach a sufficiently high softening temperature. The preferred level is 0-30% by weight, more particularly 0-20% by weight. $Al_2O_3$ must be in an amount not more than 20% by weight. A level exceeding 20% by weight will prevent glass formation. The preferred amount is 0-5% by weight.

The first glass is used in the amount of 5-35% by weight, preferably 10-25% by weight, based on the weight of the total composition, including the organic medium. The amount is 7-50% be weight, preferably 14-36% by weight if based on the total inorganic solids.

The second glass is a $PbO-SiO_2$ type glass in which PbO amounts to at least 50% by weight. The first glass, only when combined with the second glass, can decrease the length effect of the TCR of a resistor, as well as decrease the variation in the resistance value and the TCR on firing the overcoat glass.

The second glass is preferably a glass containing 50-80% by weight of PbO, 10-35% by weight of $SiO_2$, 0-10% by weight of $Al_2O_3$, 1-10% by weight of $B_2O_3$, 1-10% by weight of CuO and 1-10% by weight of ZnO in which PbO, $SiO_2$, $Al_2O_3$, $B_2O_3$, CuO and ZnO amount to at least 95% by weight. This is because mixing a second glass within the composition of this range with the first glass can further increase the firing capability, in addition to decreasing the length effect on TCR and the small variations in resistance values and the TCR on firing the overcoat glass.

The second glass is used in an amount of 5-40% by weight, preferably 10-35% by weight on the basis of the total weight of the composition containing the organic medium. The amount is 7-57% by weight, preferably 14-50% by weight if based on the total inorganic solids.

The thick film resistor composition of this invention may further comprise a third glass as a glass binder. The third glass is a $PbO$-$SiO_2$ glass with its softening point adjusted to be lower than that of the first glass but higher than that of the second glass. For example, it has a composition of 65.0% by weight of $PbO$, 34.0% by weight of $SiO_2$ and 11.0% by weight of $Al_2O_3$.

The third glass is used in an amount of 0-30% by weight, preferably 5-25% by weight on the basis of the total weight of the composition containing he organic medium. The amount is 0-43% by weight, preferably 7-36% by weight if based on the total inorganic solids.

The first, second and third glasses may individually contain, in addition to the above components, less than 5% by weight of a component for controlling the coefficient of thermal expansion of a thick film resistor and the aging temperature of the glass binder. Since the common base material, a 96% alumina ceramic, has a coefficient of thermal expansion of $75 \times 10^{-7}/C$, the thick film resistor preferably has a lower coefficient of thermal expansion than that. Adjusting the contents of silica, lead oxide and boron oxide can adjust the coefficient of thermal expansion. Sometimes introducing a small amount of lithium, potassium or sodium oxide can adjust the coefficient of thermal expansion. It is advantageous to incorporate up to about 3% by weight of lithium oxide in the glass binder component. Introducing $Li_2O$ into a binder together with a small amount of $ZrO_2$ and/or $TiO_2$ gives preferable effects in addition to that on the coefficient of thermal expansion. Up to about 4% of $ZrO_2$ increases the resistance of a glass against its dissolution in an alkali solution while $TiO_2$ increases the resistance of the glass against acid attack. If the glass is a zinc aluminoborosilicate salt glass containing no $PbO$, incorporating $Na_2O$ can give a preferred range for the coefficients of thermal expansion.

The first, second and third glasses as glass binders can be prepared by the usual glass manufacturing technology. That is to say, the desired components or their precursors, for example, $H_2BO_3$ for $B_2O_3$ at the desired ratio are mixed and the mixture is heated to give a melted product for manufacture. As is well known in the art to which this invention is related, heating is carried out to reach its peak temperature for a period where the melted product is completely liquid and yet gas evolution ceases. The peak temperature in this invention is 1100-1500C, normally ranging from 1200-1400C. The melt is then typically cooled by pouring onto a cold belt or into cold running water for quenching. Then, optionally, the product is mill treated to reduce particle size.

More specifically, the glass used can be prepared by melting in a platinum crucible in an electrically heated silicon carbide furnace for 20 minutes to 1 hour at about 1200-1400C. A rotary or vibrating mill treatment can bring the final particle size to a level of 1-4 $m^2/g$. The vibrating mill treatment is carried out in an aqueous medium by vibrating a vessel containing the inorganic powder and cylinders, such as alumina and the like for a specific period of time.

The thick film resistor composition of this invention may further contain an inorganic additive such as $Nb_2O_5$. The $Nb_2O_5$ contributes to the electrical conductivity of the thick film resistor. The inorganic additive is used in an amount of 0-4% by weight based on the total weight of the composition including an organic medium or 0-6% by weight if based on the total inorganic solids.

These inorganic solids of this invention are dispersed in an organic medium (vehicle) to prepare a printable base composition. The organic medium is used in an amount of 20-40% by weight, preferably 25-35% by weight on the basis of the total weight of the composition.

Any inert liquid can be used as the vehicle. Water, or a variety of organic liquids can be used as a vehicle either with or without a concentrator and/or stabilizer and/or other general additives. The organic liquids which can be used are, for example, aliphatic alcohols or the esters of such alcohols, such as acetates and propionates, terpenes, such as wood turpentine oil, terpineol and others, resins in solvents such as wood turpentine oil and ethylene glycol monoacetate monobutylether, or such as a solution of polymethyl methacrylate in a lower alcohol or a solution of ethyl cellulose. The vehicle may contain a volatile liquid for accelerating a rapid solidification after applying the vehicle to ba base material, or else the volatile liquid may comprise the vehicle. A preferred vehicle is based on ethyl cellulose and beta-terpineol. The thick resistor composition of this invention can, for example, be prepared by a three-roll mill.

The resistor composition of this invention can be printed as a film by the usual methods onto ceramics, alumina or other dielectric base materials. More advantageously, an alumina base material is used and the resistor composition is printed on a pre-fired palladium-silver terminal.

In general, a screen stencil technique is preferably used. The resultant printed pattern is normally left standing for leveling followed by drying for about 10 minutes at high temperatures, for example 150C then firing at a peak temperature of about 850C in a belt furnace in air.

TEST PROCEDURES:

The following is a description of the test procedures used for various properties of the thick film resistor composition:

(1) Preparation of Thick Film Resistor Composition Pastes

The desired inorganic solids and vehicles were mixed and kneaded into a paste on a roll mix.

(2) Printing and Firing

A Pd/Ag type thick film conductor was printed onto a 1 inch x 1 inch (25 mm²) 96% alumina baseboard to reach a dried film thickness of $18 \pm 2$ μm followed by drying for 10 minutes at 150C.

Then the thick film resistor composition paste was printed to 0.8 mm or 0.5 mm x 0.5 mm size. The thickness is chosen to reach a dry film thickness of $18 \pm 2$ μm. This is then dried for 10 minutes at 150C and heated and fired in a belt furnace. The temperature profile of the belt furnace consists of maintaining the sample for 10 minutes at a peak temperature of 850C and cooling; the firing time is 30 minutes from the time at which the temperature reaches 100C in a heating cycle until the time when the temperature drops below 100C in the cooling cycle.

(3) Measurement of Resistance Values

The resistance values were measured with a probe of the terminal pattern using an autorange, autobalance, digital ohmmeter with a 0.01% precision. Specifically, the sample is installed on the terminal post of a chamber followed by electrically connecting it to a digital ohm meter. The temperature in the chamber is regulated to 25C until it reaches equilibrium, after which the resistance of each sample is measured and recorded.

Then the chamber temperature was raised to 125C until equilibrium is attained. The resistance of the sample is then remeasured and recorded. The TCR is calculated by the following equation:

$$TCR = R_{125C} - R_{25C} / R_{25C} \times (10,000) \text{ ppm/C}$$

To evaluate the length effect, $\Delta TCR_{0.5- 0.8}$ is calculated by the following equation:

$$\Delta TCR_{0.5 - 0.8} = TCR_{0.5 \times 0.5} - TCR_{0.8 \times 0.8}$$

(4) Printing and Firing Overcoat Glass

In order to evaluate the resistance values and the variation of the TCR on firing an overcoat glass, a primary overcoat glass is printed to reach a fired thickness of 7-13 μm on a 0.8 mm x 0.8 mm thick film resistor obtained by firing as described above, followed by firing at 620C. A secondary overcoat glass is printed on top of it to reach a thickness of 10-50 μm, followed by firing at 620C. These overcoat glass materials are $PbO$-$SiO_2$ type glasses.

The resistance before printing overcoat glass (R as fired), the resistance after a primary overcoat glass firing ($R_{G1}$), and the resistance ($R_{G2}$) after firing with the secondary overcoat glass are measured, respectively, by a method similar to the above at a measurement temperature of 25C.

The change in resistance after firing the primary and secondary overcoat glasses ($R_{G1}$ and $R_{G2}$) and the change in TCR ($\Delta TCR_{G1}$ and $\Delta TCR_{G2}$) are calculated by the following equations:

$$\Delta R_{G1} = ([R_{G1} - R_{as\ fired}]/[R_{as\ fired}]) \times 100(\%)$$
$$\Delta R_{G2} = ([R_{G2} - R_{G1}]/[R_{G1}]) \times 100(\%)$$
$$\Delta TCR_{G1} = TCR_{G1} - TCR \text{ as fired}$$
$$\Delta TCR_{G2} = TCR_{G2} - TCR_{G1}$$

As described below, thick film resistor compositions, Examples 1-12 were prepared. Examples 1, 2, 4, 5, 8, 10 and 12 are the compositions of this invention. Examples 3, 6, 7, 9 and 11 are control examples of which the compositions of 7, 9 and 11 are commercial compositions. These compositions all contain inorganic solids and organic vehicles at a weight ration of 70:30.

The resistor compositions were prepared in the following manner.

The electrical conductor component, $Pb_2Ru_2O_6$ was prepared by allowing PbO to react with $RuO_2$ in air at 800-1000C followed by pulverizing to reach a surface area of about 3-15 m²/g.

5

EP 0 548 865 B1

<u>EXAMPLES:</u>

Nine glasses (glasses A-1 to A-7, glass B and glass C) of different compositions as given in Table 1 to be used as glass binders were prepared. These glasses were prepared by heating and melting the desired starting materials until gas evolution completely ceased, for about 30 minutes to 5 hours at 1000C - 1700C depending upon the glass composition, followed by quenching in water and mill treating to reach a surface area of about 2-5 m²/g. The vehicle used as a mixture of 10-30 parts of ethyl cellulose and 90-70 parts of beta-terpineol.

In addition to these conductor components and various glasses, an inorganic additive, $Nb_2O_5$, was used as an inorganic solid in preparing the compositions of Examples 1-12 having the compositions shown in Table 2 followed by printing and firing. Examples 1-7 contained different glass binder compositions and the above method was used to measure the length effect of TCR. For Examples 8-11, the above method was used to print and fire the overcoat glass followed by measuring resistance and TCR variation. For Examples 1 and 12, the appearance of the fired resistors was observed to evaluate firing capability.

Incidentally, glasses A-1, 2, 4 and 5 are the first glasses of this invention; glass B is the second glass of this invention.

Table 2 summarizes the resistance values, TCR and the like of compositions of Examples 1-11; Fig. 1 shows the length effect of the TCR of compositions of Examples 1-7.

## Table 1

### Glass Compositions

| Glass No. | A-1 | A-2 | A-3 | A-4 | A-5 |
|---|---|---|---|---|---|
| PbO | - | - | - | 28.0 | 43.6 |
| $SiO_2$ | 55.0 | 53.0 | 52.0 | 48.0 | 37.5 |
| $Al_2O_3$ | 14.0 | 15.0 | 4.8 | 6.0 | 4.3 |
| $B_2O_3$ | 7.5 | 10.0 | 39.6 | 10.0 | 4.9 |
| CuO | - | - | - | - | - |
| ZnO | - | - | 1.2 | - | - |
| CaO | 21.5 | 22.0 | - | 10.0 | 9.7 |
| $TiO_2/Fe_2O_3$ | 0.5 | - | - | - | - |
| $M_2O$ M=K, Na | 0.5 | - | - | - | - |
| MgO | 1.0 | - | - | - | - |
| BaO | - | - | 2.3 | - | - |
| $ZrO_2$ | - | - | - | - | - |

| Glass No. | A-6 | A-7 | Glass C | Glass B |
|---|---|---|---|---|
| PbO | 60.3 | 59.9 | 65.0 | 59.5 |
| $SiO_2$ | 31.4 | 32.3 | 34.0 | 29.5 |
| $Al_2O_3$ | 2.7 | 4.7 | 1.0 | 2.5 |
| $B_2O_3$ | - | 3.1 | - | 3.1 |
| CuO | - | - | - | 2.8 |
| ZnO | - | - | - | 2.6 |
| CaO | - | - | - | - |
| $TiO_2/Fe_2O_3$ | - | - | - | - |
| $M_2O$ M=K, Na | - | - | - | - |
| MgO | - | - | - | - |
| BaO | 1.3 | - | - | - |
| $ZrO_2$ | 4.2 | - | - | - |

## Table 2

| Example No. | 1 | 2 | 3 | 4 | 5 |
|---|---|---|---|---|---|
| Conductor Components | | | | | |
| $RuO_2$ | 3.0 | 3.0 | 3.0 | 3.0 | 3.0 |
| $PbRuO_3$ | 17.0 | 17.0 | 17.0 | 17.0 | 17.0 |
| Glass Binders | | | | | |
| Glass A-1 | 12.0 | | | | |
| Glass A-2 | | 12.0 | | | |
| Glass A-3 | | | 12.0 | | |
| Glass A-4 | | | | 12.0 | |
| Glass A-5 | | | | | 12.0 |
| Glass A-6 | | | | | |
| Glass A-7 | | | | | |
| Glass B | 20.0 | 20.0 | 20.0 | 20.0 | 20.0 |
| Glass C | 16.8 | 16.8 | 16.8 | 16.8 | 16.8 |
| Additive $Nb_2O_3$ | 1.2 | 1.2 | 1.2 | 1.2 | 1.2 |
| Organic Medium | 30.0 | 30.0 | 30.0 | 30.0 | 30.0 |
| $R_{0.8}$ ($\Omega/\square$) | 47600 | 56710 | 30160 | 38110 | 26570 |
| $TCR_{0.3}$ (ppm/C) | 53 | 77 | 48 | 92 | 101 |
| $\Delta TCR_{0.5-0.8}$ (ppm/C) | 11 | 11 | 38 | 17 | 24 |
| R ($\Omega/\square$) | | | | | |
| $\Delta R$ by G1 (ppm/C) | | | | | |
| $\Delta R$ by G2 (ppm/C) | | | | | |
| $\Delta TCR$ by G1 (ppm/C) | | | | | |
| $\Delta TCR$ by G2 (ppm/C) | | | | | |

Table 2 (contd.)

| Example No. | 6 | 7 | 8 | 9 | 10 |
|---|---|---|---|---|---|
| Conductor Components | | | | | |
| $RuO_2$ | 3.0 | 3.0 | 18.0 | 34.0 | 20.0 |
| $PbRuO_3$ | 17.0 | 17.0 | - | - | - |
| Glass Binders | | | | | |
| Glass A-1 | | | 20.0 | | 14.5 |
| Glass A-2 | | | | | |
| Glass A-3 | | | | | |
| Glass A-4 | | | | | |
| Glass A-5 | | | | | |
| Glass A-6 | 12.0 | | | | |
| Glass A-7 | | 12.0 | | | |
| Glass B | 20.0 | 20.0 | - | - | - |
| Glass C | 16.8 | 16.8 | 4.5 | 41.0 | 12.0 |
| Additive $Nb_2O_3$ | 1.2 | 1.2 | 1.5 | 0.5 | 1.4 |
| Organic Medium | 30.0 | 30.0 | 30.0 | 24.5 | 33.1 |
| $R_{0.8}$ ($\Omega/\square$) | 28780 | 35760 | | | |
| $TCR_{0.3}$ (ppm/C) | 90 | 54 | | | |
| $\Delta TCR_{0.5-0.8}$ (ppm/C) | 45 | 34 | | | |
| $R$ ($\Omega/\square$) | | | 1000 | 1000 | 100000 |
| $\Delta R$ by G1 (ppm/C) | | | 0.2 | 6.4 | 1.6 |
| $\Delta R$ by G2 (ppm/C) | | | 0 | 1.1 | 0.4 |
| $\Delta TCR$ by G1 (ppm/C) | | | 5 | 28 | 8 |
| $\Delta TCR$ by G2 (ppm/C) | | | 1 | 8 | 1 |

EP 0 548 865 B1

Table 2 (contd.)

| Example No. | 11 | 12 |
|---|---|---|
| Conductor Components | | |
| RuO$_2$ | 23.0 | 3.0 |
| PbRuO$_3$ | - | 17.0 |
| Glass Binders | | |
| Glass A-1 | | 12.0 |
| Glass A-2 | | |
| Glass A-3 | | |
| Glass A-4 | | |
| Glass A-5 | | |
| Glass A-6 | | |
| Glass A-7 | 47.0 | |
| Glass B | | |
| Glass C | | 30.8 |
| Additive Nb$_2$O$_3$ | | 1.2 |
| Organic Medium | 30.0 | 30.0 |
| R$_{0.8}$ (Ω/□) | | |
| TCR0.3 (ppm/C) | | |
| Δ TCR$_{0.5-0.8}$ (ppm/C) | | |
| R (Ω/□) | 100000 | |
| ΔR by G1 (ppm/C) | 0.6 | |
| ΔR by G2 (ppm/C) | 2.5 | |
| ΔTCR by G1 (ppm/C) | 13 | |
| ΔTCR by G2 (ppm/C) | 4 | |

Among Examples 1-7, Examples 1, 2, 4, 5, 8 and 10 are compositions of this invention comprising glasses A-1, 2, 4 and 5 belong to the first glass component of this invention, and the second glass component is glass B. The compositions of this invention show TCR$_{0.5-0.8}$ of 11-24 ppm/C smaller than the values of 34-45 ppm/C for the control examples compositions, clearly indicating that the present invention improves on the length effect of the TCR. In particular, compositions of Examples 1 and 2, using as the first glass component, PbO-free glasses A-1 and 2 gave the best results. The results of Examples 1-7 illustrated in Fig. 7 also clearly show that the resistor compositions of this invention have a small variation amplitude for the TCR in accordance with the resistor length.

The results of Examples 8-11 shown in Table 2 show that the resistor compositions of this invention not only improve the length effect on TCR but decrease the variation amplitudes of resistance values and TCR to a very low level, before and after firing the overcoat glass.

A comparison of the surface appearance of the thick film resistors of Example 1 with Example 12 showed that Example 1 gave a better melt and firing condition on the conductor and base material. Example 1 used a PbO-SiO$_2$ type glass B as a second glass component containing Al$_2$O$_3$, B$_2$O$_3$, CuO and ZnO, while Example 12 used glass C containing no B$_2$O$_3$, CuO or ZnO, which replaced the glass B used in Example 1. This shows that the use of a PbO-SiO$_2$ type glass containing Al$_2$O$_3$, B$_2$O$_3$, CuO and ZnO as the second glass component improves the firing capability of a resistor composition.

As described above, the thick film resistor compositions of this invention give thick film resistors which have a small length effect on the TCR and also have a small variation in the resistance values and the TCR upon firing with an overcoat glass.

10

## Claims

1. A thick film resistor composition comprising by weight finely divided particles of (a) 10-50% of ruthenium oxide-based compound, (b) 5-35% of a first glass having a composition of 30-60% $SiO_2$, 5-30% CaO, 1-40% $B_2O_3$, 0-50% PbO and 0-20% $Al_2O_3$, in which the $SiO_2$, CaO, $B_2O_3$, PbO and $Al_2O_3$ constitute at least 95% of the glass, (c) 5-40% of a second glass which is a lead silicate glass containing at least 50% PbO, all of (a) through (c) being dispersed in a liquid organic medium.

2. The composition of claim 1 in which the second glass is comprised of 50-80% PbO, 10-35% $SiO_2$, 1-10% $Al_2O_3$, 1-10% $B_2O_3$, 1-10% CuO and 1-10% ZnO and the PbO, $SiO_2$, $Al_2O_3$, $B_2O_3$, CuO and ZnO constitute at least 95% of the glass.

3. The composition of claim 1 in which component (a) is $Pb_2Ru_2O_6$.

## Patentansprüche

1. Dickfilm-Widerstandszusammensetzung, pro Gewicht umfassend fein zerteilte Teilchen aus (a) 10-50% einer Verbindung auf Rutheniumoxid-Basis, (b) 5-35% eines ersten Glases mit einer Zusammensetzung von 30-60% $SiO_2$, 5-30% CaO, 1-40% $B_2O_3$, 0-50% PbO und 0-20% $Al_2O_3$, worin das $SiO_2$, CaO, $B_2O_3$, PbO und $Al_2O_3$ wenigstens 95% des Glases ausmachen, (c) 5-40% eines zweiten Glases, welches ein Bleisilicatglas ist, das wenigstens 50% PbO enthält, wobei alle (a) bis (c) in einem flüssigen organischen Medium dispergiert sind.

2. Zusammensetzung gemäß Anspruch 1, worin das zweite Glas 50-80% PbO, 10-35% $SiO_2$, 1-10% $Al_2O_3$, 1-10% $B_2O_3$, 1-10% CuO und 1-10% ZnO umfaßt, und worin das PbO, $SiO_2$, $Al_2O_3$, $B_2O_3$, CuO und ZnO wenigstens 95% des Glases ausmachen.

3. Zusammensetzung gemäß Anspruch 1, worin Komponente (a) $Pb_2Ru_2O_6$ ist.

## Revendications

1. Une composition pour résistance en film épais comprenant, en poids, des particules finement divisées de:
   (a) 10 à 50% de dérivé à base d'oxyde de ruthénium,
   (b) 5 à 35% d'un premier verre présentant une composition de 30 à 60% de $SiO_2$, 5 à 30% de CaO, 1 à 40% de $B_2O_3$, 0 à 50% de PbO et 0 à 20% de $Al_2O_3$, dans lequel $SiO_2$, CaO, $B_2O_3$, PbO et $Al_2O_3$ constituent au moins 95% du verre,
   (c) 5 à 40% d'un second verre qui est un verre de silicate de plomb contenant au moins 50% de PbO, l'ensemble de (a) à (c) étant dispersé dans un milieu organique liquide.

2. La composition selon la revendication 1, dans laquelle le second verre est constitué de 50 à 80% de PbO, 10 à 35% de $SiO_2$, 1 à 10% de $Al_2O_3$, 1 à 10% de $B_2O_3$, 1 à 10% de CuO et 1 à 10% de ZnO, et PbO, $SiO_2$, $Al_2O_3$, $B_2O_3$, CuO et ZnO constituent au moins 95% du verre.

3. La composition selon la revendication 1, dans laquelle le composant (a) est $Pb_2Ru_2O_6$.